# EUROPEAN PATENT SPECIFICATION

(11) **EP 3 129 811 B1**
(45) Date of publication and mention of the grant of the patent: **26.09.2018**
(21) Application number: 15715279.4
(22) Date of filing: 10.04.2015
(51) Int. Cl.: G02B 5/02, G02B 5/26, G02B 5/28, G02B 5/22, G02B 1/11, H02S 40/20

(54) **INFRARED TRANSMITTING COVER SHEET**
INFRAROTÜBERTRAGENDE ABDECKFOLIE
FEUILLE DE COUVERTURE TRANSMETTANT L'INFRAROUGE

(30) Priority: 10.04.2014 WO PCT/EP2014/057253
(43) Date of publication of application: 15.02.2017
(73) Proprietor: CSEM Centre Suisse d'Electronique et de Microtechnique SA, 2002 Neuchâtel (CH)
(72) Inventor: BALLIF, Christophe, CH-2000 Neuchâtel (CH); ESCARRE PALOU, Jordi, CH-2000 Neuchâtel (CH); PERRET-AEBI, Laure-Emmanuelle, CH-2000 Neuchâtel (CH); LI, Hengyu, 2068 Hauterive (CH)
(74) Representative: P&TS SA (AG, Ltd.)
(86) International application number: PCT/EP2015/057905
(87) International publication number: WO 2015/155357

(56) References cited:
- EP-A1- 1 837 920
- WO-A1-2004/079278
- WO-A1-2014/045144
- WO-A2-2014/045141
- US-A1- 2010 096 011
- US-B1- 6 208 466

## Description

### Technical Field

The invention relates to the field of colored cover sheets and films. More particularly, the present invention relates to an infrared transmitting cover sheet that may be used in applications wherein near infrared light has to be transmitted by the cover sheet that is positioned in front of an infrared sensitive device.

### Background of the invention

Despite the wide diversity of available solar technologies, solar energy systems are still not considered as main stream technologies in building practice. So far most photovoltaic systems are optimized only for efficiency which implies absorbing a maximum number of photons, and hence leading to a dark blue and ideally black color appearance. Most of the photovoltaic cells on the market are crystalline cells with connecting ribbons which have an unaesthetic appearance.

One of the reasons of the lack of wide spread use of solar technologies for buildings is the lack of awareness and knowledge of integration possibilities among architects and the lack of solar products designed for building integration. In parallel there is a recent trend to transform buildings from energy users to energy producers. The old wide spread concept of adding solar panels on the roof of a building has evolved and a lot of effort is being done to merge the construction technology with the science and technology of photovoltaics in what is called the Building Integrated Photovoltaics. Architectural, structural and aesthetic solutions are being constantly sought to integrate solar photovoltaic elements into buildings, allowing the incorporation of energy generation into everyday structures such as homes, schools, offices, hospitals and all kind of buildings. In a growing number of applications color films are needed that satisfy at the same time four fundamental criteria.
- the color films should have a very high near-infrared transmission;
- A wide range of colored effects should be provided in reflection;
- the transmitted visible light intensity through the color film should be small enough so that when attached to an object, this object becomes invisible for an observer. The acceptable amount of transmitted visible light will depend on the color and color contrast of the different areas of the object. For PV applications, the residual light transmitted through the color film may be converted in electricity.
- It is also desired that the produced reflection color effect is highly insensitive to the incidence angle of the light incident on the film and/or the viewing angle of an observer positioned to the incident light side of the color film.

In one approach a front colored glass is integrated with the photovoltaic modules, such as explained in the following publication: "Efficiency of silicon thin-film photovoltaic modules with a front colored glass; S. Pélisset et al., Proceedings CISBAT 2011, pp.37-42". This approach does not achieve the four mentioned criteria. It is also expensive, leads to heavy solar elements and does not allow to be easily integrated in a production process. Prior art in the field of color films discloses either color filters having visible light transmittance for certain colors, or color filters having a specific reflectance of certain colors and having also a high near-infrared transmission. An example is disclosed in the document US 5,502,595 which discloses a multi-layer color filter realized by a PECVD method. The drawback of this color filter is that a part of the visible light is transmitted. In one of the filters disclosed in US 5,502,595 a high transmittance of near infrared light is transmitted but at least 50% of the red part of the visible spectrum passes through the filter. The document US 5,502,595 does not disclose a preselected color spectrum of a portion of visible light reflected from the color filter.

In another approach disclosed in EP 1837920 A1 an infrared-transmitting cover is disclosed that transmits near-infrared light and reflects a part of the visible light so that the film appears with a certain color. The visible light is partly reflected by a dielectric multilayer. In order to avoid that visible light is transmitted through the film a black absorbing layer, such as black paint, is arranged to the side opposite to the incident light side of the dielectric multilayer. The limitation of such approach is that the color appearance effect depends on the incident angle of the incident light beam. Moreover, the disclosed device completely blocks all visible light making it less suitable for PV applications as it absorbs all the residual transmitted visible. Although this residual visible light may be a small percentage of the incident light on the film, it is important for PV cells to convert this residual light in electricity

### Summary of the invention

The present invention provides a new color film and is intended to be used as an infrared transmitting cover sheet to be positioned in front of a near-infrared photo-electric conversion device and having the additional property of presenting a predetermined uniform color to an observer, positioned to the incident light side of the infrared transmitting cover sheet, while at the same time hiding any object behind said infrared transmitting cover sheet, for example a near-infrared sensitive photo-electric conversion device. The perceived color is also substantially independent of the incidence angle of the incident light and/or the viewing angle of the observer.

The invention has been made while seeking innovative solutions to integrate photovoltaic elements into buildings and give these photovoltaic elements an esthetic aspect, allowing to make photovoltaic elements more attractive for their integration in new or existing constructions such as for example roofs or facades.

To that problem a solution has been found with the invention, which consists in providing the color filter of the invention which may be arranged to a photovoltaic element or photoconversion device. The color filter, defined as an infrared transmitting cover sheet or a cover sheet or a color layer or a sheet, provides a homogeneous colored aspect to elements on which it is arranged. Arranging the infrared transmitting cover sheet of the invention for example in front of infrared photosensitive devices allows to hide from an observer connecting elements, borders or other non-esthetic features and/or colors of the photosensitive parts of the photosensitive devices.

At the same time it has to be assured that the photoconversion element or device has to keep acceptable photoconversion efficiency, therefore high infrared transmittance of the color filter has to be guaranteed. The color film should also pass residual visible light that is not used to create the color reflection effect. Recuperating this residual light is important in the case wherein the color film is arranged to a photoelectric device because any small improvement, even only some % of the incident light, in the photoelectric conversion efficiency is important in the field of photovoltaics.

While the current invention has been developed mainly for photovoltaic applications, the invented color filter may be used for other applications different than the field of the esthetic integration of photovoltaic elements or devices in buildings or commercial products. For example it may be used in greenhouses that have to present a colored aspect to an outside observer. The color film may have any color appearance, including white.

The invented color film allows to provide a solution to the given problem.

More specifically the invention relates to an infrared transmitting cover sheet comprising the features defined in claim 1.

The infrared transmitting cover sheet may be realized according to different types: a first type, a second type and a third type of infrared transmitting cover sheets. Providing three complementary types of said infrared transmitting cover sheet allows to be able to cover a wide range of color appearance possibilities of the infrared transmitting cover sheet. These color appearances are substantially independent of the incidence angle of the incident light and/or the viewing angle of the observer.

Each of said first type, second type and third type of infrared transmitting cover sheets comprise said interference multilayer and this interference multilayer is called the first interference multilayer, the second interference multilayer and the third interference multilayer in respectively first type, a second type and a third type of infrared transmitting cover sheets. Said first interference multilayer, said second interference multilayer and said third interference multilayer may be different types of interference multilayers but have always the above mentioned optical transmission characteristics of said interference multilayer.

A first type of infrared transmitting cover sheet comprises at least
- a front sheet arranged to the incident light side of said infrared transmitting cover sheet,
- a scattering layer arranged on said front sheet, to the side opposite to the incident light side
- a first multilayer arranged on said scattering layer, said first multilayer comprising at least a first interference multilayer, said first interference multilayer comprising at least one absorption layer.

Said front sheet, said scattering layer and said first multilayer cooperate with one another so as to form said infrared transmission means, said visible light transmission means and said reflection means.

Said first type of infrared transmitting cover sheet is an appropriate solution for infrared transmitting cover sheets having preferred color appearances of the infrared transmitting cover sheet to an observer, such as grey, brown, terracotta, gold-like and red colors. To the contrary of second and third type of infrared transmitting cover sheet, said first type of infrared transmitting cover sheet is less suited for blue, green and high luminance colors.

A second type of infrared transmitting cover layer comprises at least
- a substrate,
- a second multilayer arranged on said substrate, said second multilayer comprising at least a second interference multilayer, said second interference multilayer comprising at least an absorption layer,
- said substrate and said second multilayer cooperate with one another so as to form said infrared transmission means, said visible light transmission means and said reflection means.

Said second type of infrared transmitting cover sheet is an appropriate solution for infrared transmitting cover sheets having preferred color appearances of the infrared transmitting cover sheet such as metallic-like colors, and is less suited for infrared transmitting cover sheets having blue and green color appearances.

A third type of infrared transmitting cover sheet comprises at least:
- an absorption front sheet, arranged to the incident light side of said infrared transmitting cover sheet and comprising substances that absorb at least a portion of said incident visible light,
- a third multilayer arranged on said absorption front sheet, to the side opposite to the incident light side, said third multilayer comprising at least a third interference multilayer,

Said absorption front sheet and said third multilayer cooperate with one another so as to form said infrared transmission means, said visible light transmission means and said reflection means.

Said third type of infrared transmitting cover sheet is an appropriate solution for a very wide range of possible color appearances of the infrared transmitting cover sheet and there is no preferred color range for said third type of infrared transmitting cover sheet.

While the current invention has been made initially for photovoltaic applications, the invented infrared transmitting cover sheets may be used for other applications different than the field of the esthetic integration of photovoltaic elements or devices in buildings.

### Brief description of the figures

Fig. 1 shows a first type infrared transmitting cover sheet;
Fig. 2 illustrates the light trapping of a portion of visible light in a high-index layer of an infrared transmitting cover sheet;
Fig. 3 shows another first type infrared transmitting cover sheet;
Fig. 4 shows a second type infrared transmitting cover sheet;
Fig. 5 shows another second type infrared transmitting cover sheet;
Fig. 6a shows a third type infrared transmitting cover sheet;
Fig. 6b shows another third type infrared transmitting cover sheet;
Fig.7a-d show different variants of a light dispersion layer;
Fig. 8a-c show different embodiments of third type infrared transmitting cover sheet;
Fig. 9 shows a color chart with color coordinates of first type infrared transmitting cover sheets;
Fig. 10a shows reflection characteristics of first type infrared transmitting cover sheets comprising a ZnO scattering layer;
Fig. 10b shows transmission characteristics of first type infrared transmitting cover sheets comprising a ZnO scattering layer;
Fig. 11a shows reflection characteristics of first type infrared transmitting cover sheets comprising an acrylic scattering layer;
Fig. 11b shows transmission characteristics of first type infrared transmitting cover sheets comprising an acrylic scattering layer;
Fig. 12 shows a table with color characteristics of first type infrared transmitting cover sheets comprising a ZnO scattering layer;
Fig. 13 shows another table with color characteristics of first type infrared transmitting cover sheets comprising an acrylic scattering layer;
Fig. 14 shows a color chart with color coordinates of second type infrared transmitting cover sheet and of a reference layer of gold;
Fig. 15 shows reflection and transmittance characteristics of second type infrared transmitting cover sheet and of a reference layer of gold;
Fig. 16 shows a table with color characteristics of a second type infrared transmitting cover sheet and of a reference layer of gold;
Fig 17 shows a color chart with CIE color coordinates of absorption sheets and third type infrared transmitting cover sheets;
Fig. 18 shows transmission characteristics of absorption sheets used in third type infrared transmitting cover sheets;
Fig. 19a shows reflection characteristics of third type infrared transmitting cover sheets;
Fig. 19b shows transmission characteristics of third type infrared transmitting cover sheets;
Fig. 20 shows a table with CIE color coordinates of absorption sheets of a third type infrared transmitting cover sheet;
Fig. 21 shows another table with CIE color coordinates of third type infrared transmitting cover sheets;
Fig. 22 shows a table with the color coordinates of preferred colors of first, second and third type infrared transmitting cover sheets;
Fig. 23 shows the visible light transmission of an infrared transmitting cover sheet and the external quantum efficiency (EQE) of a solar cell with the same infrared transmitting cover sheet attached on top by means of an encapsulant layer;
Fig. 24 compares, in a color chart with CIE color coordinates, the color variance of an infrared transmitting cover of prior art with an infrared transmitting cover of the present invention.

### Detailed description

The invention relates to an infrared transmitting cover sheet 1 intended to receive incident light, comprising:
- infrared transmission means arranged to transmit at least 65% of incident infrared light, defined between 700nm and 2000nm, through said infrared transmitting cover sheet, the transmission of 65% being a mean value integrated over the wavelength range between 700nm and 2000nm; said transmission is defined as the ratio, expressed in %, of the transmitted and incident near-infrared light.
- visible light transmission means arranged to transmit as less as possible incident visible light 10 having wavelengths lower than 600nm, preferably lower than 650nm, more preferably lower than 700nm, excluding the wavelength of 700nm, through said infrared transmitting cover sheet, said as less as possible transmission being preferably lower than 20%, preferably lower than 15%, and more preferably lower than 10%, said transmission value is defined as an average of the transmission values measured at each wavelength lower than 700nm; said transmission value is defined as the ratio, expressed in %, between the transmitted and the incident visible light. The as low as possible low transmission values allow to hide to an observer any underlying structure or device or element in front of which said infrared transmitting cover sheet is arranged.
- reflection means arranged to reflect a portion of said incident visible light 10 of said infrared transmitting cover sheet, to the side of said incident light, the reflection of said portion, also defined as reflected light or reflected portion, is preferably higher than 10%, preferably higher than 20%, and more preferable higher than 40%. As an example, said portion may be a portion of incident visible light having a wavelength range of preferably 200nm, preferably 100nm, more preferably 50nm around any predetermined wavelength selected in the visible spectrum of the incident light.

Said infrared transmission means and said visible light transmission means and said reflection means comprise an interference multilayer, said interference multilayer having an averaged transmission of less than 10%, for normal incident visible light on said interference multilayer, said normal incidence being defined as being parallel to a normal to the infrared transmitting cover sheet 1.

The transmitted visible light intensity through the infrared transmitting cover sheet 1 should be small enough so that when attached to an object, this object or some parts of the object becomes invisible for an observer. The acceptable amount of transmitted visible light will depend on the color and color contrast of the different areas of the object.

For example, an infrared transmitting cover sheet 1, attached to a solar panel, transmitting 30% of visible light makes individual solar cells visible to an observer when a white back sheet is used in the back of the panel. However, a black back sheet results in a homogeneous appearance of the solar panel making individual cells undistinguishable. Objects comprising high clear-dark contrast areas require that less visible light is transmitted through the infrared transmitting cover sheet 1 to make the objects attached behind invisible.

When the infrared transmitting cover sheet 1 is applied to a solar panel, the visible light transmitted through the film is to be converted in electricity.

Another important characteristic of the infrared transmitting cover sheet 1 is that the perceived color of the infrared transmitting cover sheet 1 is, as further explained, substantially independent of the angle of the incident light on the infrared transmitting cover sheet 1 and of the angle with which an observer looks to the infrared transmitting cover sheet 1, said observer being positioned to the incident light side of the infrared transmitting cover sheet 1.

The invention relates more specifically to a first type, a second type and a third type of infrared transmitting cover sheet types, said first, second and third types being arranged to provide a technical solution for said infrared transmission means, said visible light transmission means and said reflection means. Said infrared transmitting cover sheets are also defined hereafter as color films.

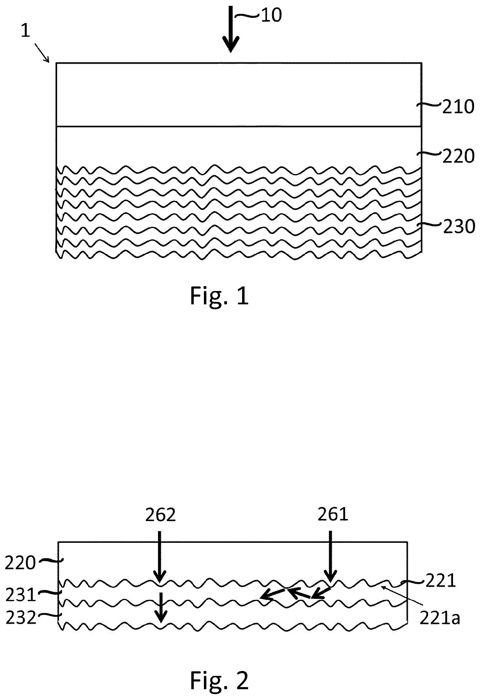

Fig. 1 illustrates an embodiment of the invention corresponding to said first type of an infrared transmitting cover sheet. A front sheet 210 is arranged to the incident light side of said infrared transmitting cover sheet 1. Said front sheet 210 is based on a material selected from the group comprising glass, Polyethylene terephthalate (PET), Polycarbonate (PC), Polyethylene napthalate (PEN), Polymethyl methacrylate (PMMA), polyesters, polyethylene (PE), polypropylene (PP), Polyethylene furanoate, polymers based on poly (bis-cyclopentadiene) condensates, fluorine based polymers, colorless polyimide (CP), cellulose, PEEK polymers, and a combination thereof. The option to choose one of these materials or a combination allows to provide a wide range of solutions in terms of mechanical strength, rigidity, resistance to impacts, impermeability to water and resistance to temperature and UV radiation for said front sheet.

A scattering layer 220 is arranged on said front sheet 210. Said scattering layer 220 comprises, to the side opposite to the incident light 10, a structured surface 221a comprising surface nanofeatures 221 arranged to scatter at least a portion of said incident visible light 10. Said surface nanofeatures 221 may have a randomly or a periodically distribution, said distribution being defined substantially in the plane of said scattering layer 220. In a variant wherein said surface nanofeatures 221 have a random distribution, the heights of the peaks of said nanostructured surface features have a root-mean-square deviation (RMS) smaller than 300 nm, preferably comprised between 10 nm and 75 nm. The lateral dimensions of said surface nanofeatures are defined by their correlation length (L) which is calculated as the radius where the autocorrelation peak drops to 1/e of its maximum value, assuming a circular shape. Said correlation length (L) is smaller than 1 micron, but is preferably comprised between 100 nm and 500 nm.

In a variant said surface nanofeatures 221 have a periodic distribution, said distribution being defined substantially in the plane of said scattering layer 220, the peak to valley height of each period is smaller than 1 micron, and is preferably comprised between 100 nm and 300 nm. The period of the distribution of said surface nanofeatures 221 is smaller than 2 micron, and preferably comprised between 200 nm and 500 nm.

The refractive index of said scattering layer 220 layer is generally comprised between 1.48 and 2.3. The material of said scattering layer 220 may be a thermal or a UV curing resin, which may have been realized either by embossing or by molding. Said scattering layer 220 may also be a coated material grown in such a way as to provide a texture having nanostructures that have a predetermined shape, such as a pyramidal shape. The material of said scattering layer 220 may be chosen from the group comprising ZnO, SNO2:F, thermal or UV curable acrylic or epoxy based resins, or a combination thereof. A ZnO layer may be realized by deposition techniques such as Low Pressure Chemical Vapor Deposition (LPCVD). Said ZnO layer has a refractive index substantially close to 2 and may, under certain conditions, be grown so that pyramidal ZnO surface nanofeatures 221 are formed on said scattering layer 220. Under certain conditions, as the ones described in "Rough ZnO layers by LPCVD process and their effect in improving performances of amorphous and microcrystalline silicon solar cells; S. Fay et al. Solar Energy Materials & Solar Cells 90, pp. 2960 (2006)", the deposition of ZnO by LPCVD produce layers that have a columnar structure consisting of conical microcrystals. Said microcrystals emerge out to the surface of said ZnO layer forming superficial nanofeatures with a pyramidal shape. The size of said superficial nanofeatures increases with the thickness of the scattering layer 220. Thicknesses between 400 nm and 2 µm lead to the preferred nanofeatures 221 when using a scattering layer 220 made of ZnO.

Alternatively said scattering layer 220 can be made of SnO2:F deposited by atmospheric pressure chemical vapor deposition (APCVD). Pyramidal nanofeatures 221 can be obtained on the surface of said scattering layer 220 by adapting the deposition parameters such as temperature, deposition time, tin precursor, additives or growth rate. Said scattering layer 220 may be a combination of at least one ZnO layer and at least one SnO2:F layer. Another technique to obtain a structured surface 221a for said scattering layer 220 is to roughen, by chemical etching, plasma treatment or mechanical techniques, the surface of said front sheet 210 to the side opposite to the incident light. An exemplary texturing technique comprises the step of chemically etching the surface of a glass front sheet by a solution of hydrofluoric acid. In a variant, a flat ZnO layer is deposited on a glass front sheet by sputtering and the texturing technique comprises the step of chemically etching the ZnO layer by a solution of hydrochloric acid. In another variant, the texturing technique comprises the step of etching the surface of a polymeric front sheet 210 based on polyester by using oxygen-argon plasma. The texture of said scattering layer 220 may also be obtained by embossing a polymeric foil or sheet or by imprinting a thermal or a UV curable acrylic resin.

A first multilayer 230 illustrated in Fig.1, is arranged on said scattering layer 220, to the side of said scattering layer 220 opposite to the incident light. Said first multilayer 230 comprises a first interference multilayer, comprising a first interferential filter, and is designed and arranged to provide a partial reflection of a portion of the incident visible light and a substantially total transmission of said near-infrared part of the spectrum.

Said first interferential filter is made of a stack of layers, each layer of said stack having a different refractive index than the adjacent layer of said stack of layers. The materials of said stack of layers are chosen from the group comprising TiO2, Nb2O5, Ta2O5, ZrO2, Al2O3, SiO2, Si3N4, MgF2 and said stack of layers comprises at least one layer chosen from the group comprising amorphous silicon (a-Si:H), microcrystalline silicon (µc-Si:H), silicon oxide alloys (SiOx), germanium (Ge), silicon-germanium alloys (SiGe). At least one of the layers of said multilayer 230 comprises an absorbing layer arranged to absorb a fraction of said visible incident light.

The large range of possible materials that may be used to form said first interference multilayer allows to provide a large range of design capabilities to provide a wide range of possibilities to create a specific color appearance of said first type of infrared transmitting cover sheet for an observer positioned at its incident light side.

In an advantageously chosen arrangement, the first layer 231 of said first interferential filter, is a high-index layer of said first interferential filter, said high-index layer being defined as the layer of said first interferential filter that has the highest refractive index of the different layers that constitute said first interferential filter. By arranging said high-index layer 231 on said textured surface 221a of said scattering layer 220, and by arranging the size and distribution of said surface features 221, a portion 261 of the visible light spectrum is scattered into said high-index layer 231 and said portion 261 is guided, by multiple reflections and scattering, into said high-index layer 231.

Fig. 2 illustrates the light trapping of a portion 261 of the visible light in said high-index layer. A high refractive index layer 231 surrounded by low index media, 232 and 220, behaves as an optical waveguide. If the texture at the interface 221a of said media is adapted to scatter a portion of incident visible light, said portion 261 will be trapped by total internal reflection inside the high index medium 231 and its absorption will be increased as the light path of said portion 261 in said high index layer 231 is considerably increased. The absorption of the fraction 262 of visible light 10 that is not scattered in the interfaces is low and said fraction 262, defined as the transmitted visible light beam, is transmitted to the layers of said first interferential filter arranged to the side opposite to the incident light side. The amount of scattering at said interface 221a depends on the effective wavelength of the light incident at said interface 221a, and is related to the refractive index of the corrugated layer 220 by the following expression: λeff = λ/nlayer, λ defining the wavelength of the light in air. Thus, light absorption in said multilayer 230 and so in said infrared transmitting cover layer can be adapted to a predetermined amount by modifying the dimension of the scattering features 221 and/or the refractive index of the scattering layer 220.

By advantageously designing and arranging said scattering layer 220 of said first type infrared transmitting cover sheet, a preselected portion of said incident visible light 10 may be scattered and incoupled and guided into the first layer of the first interference multilayer and provide for said predetermined portion a long effective path length and so obtain a high absorption in said first layer, which is preferable a high refractive index layer. By choosing selectively the absorbed portion of visible light one may have an additional design parameter to provide a specific color appearance of said first type of infrared transmitting cover sheet for an observer positioned at its incident light side.

For example, by designing and arranging the surface features 221 of said scattering layer 220 so that the correlation length (L) of said surface features 221 is substantially close to 120 nm and by advantageously choosing the thickness of said high-index layer 231 as well as the appropriate material, said high-index layer 231 may be designed and arranged to absorb selectively at least a portion of the blue and green light part of the spectrum, defined as the range of wavelengths between 380 nm and 580 nm. By absorbing a portion of the blue and green part of the visible spectrum, the reflected visible part of the spectrum, by said interferential filter, will comprise the whole visible spectrum, excluding said absorbed portion of blue and green light, so that the appearance of said interferential filter, seen by an observer positioned to the incident light side of said infrared transmitting cover sheet, is red, or brown, or a terracotta-like color because substantially only the red part of the incident visible light is reflected by said interferential filter, to the side of the incident light.

In a variant, any layer of said first multilayer 230 may be arranged to enhance the light trapping, and as such enhance the absorption of a portion of said incident visible light, in that layer. In a variant, more than one layer of said multilayer may be arranged to enhance light trapping and so enhance said absorption. In another variant, at least one diffraction grating structure may be arranged in said multilayer.

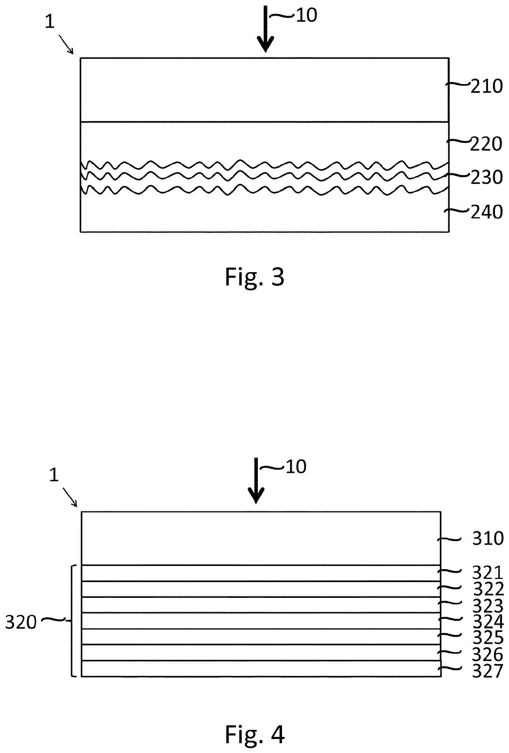

In a variant, shown in Fig.3, a first encapsulant layer 240 may be arranged on said first multilayer 230, to the side opposite to the incident light side. Examples of encapsulant materials are based on a material chosen among ethylene vinyl acetate (EVA), polyvinyl butyral (PVB), polyvinyl acetate (PVA), polyurethane (TPU), thermal Polyolefin (TPO), silicone elastomers, epoxy resins, and combinations thereof.

Arranging an encapsulant layer 240 to said first multilayer 230, to the opposite side of the incident light, allows to provide a solution to improve the adherence of said first type of infrared transmitting cover sheet to a surface such as an infrared photoconversion element or the like. If the infrared transmitting cover sheet is applied on an infrared photoconversion element, the encapsulant layer 240 together with the front sheet has the function to protect the infrared photoconversion element, from the combined action of changing temperature and humidity conditions of the environment, and assures a long term high reliability of the infrared photoconversion element. The use of the mentioned materials of said encapsulating layer provides a wide range of solutions for said encapsulant layer.

In an embodiment an additional diffusing layer may be arranged on said front sheet 210 to give a mate appearance and/or to reduce the total reflection of said infrared transmitting cover layer 1. Said diffusing layer may be arranged on an additional foil arranged to said first infrared transmitting cover layer 1. In an embodiment said front sheet 210 may comprise at least a textured or roughened surface. In a variant, at least an anti-reflective coating may be arranged on said front sheet 210.

Fig. 4 illustrates an embodiment of the invention corresponding to a second type of an infrared transmitting cover sheet.

In the embodiment of Fig. 4 a second multilayer 320 is arranged to a front sheet 310. Said second multilayer 320 comprises at least a second interferential layer, said second interferential layer being similar to the first interferential layer of the embodiment of Figures 1, 2, 3, explained in paragraphs [00033] to [00034], with the difference that said second interferential filter is not textured but has a substantial flat shape, comprising a stack of layers substantially parallel to the surface of said substrate facing said incident light 10. Also, said second interferential filter comprises at least a layer arranged to absorb a portion of the visible incident light 10. The materials of said absorbing layer are based on a material chosen from a-Si, µc-Si:H, SiOx, Ge, SiGe alloys, or their combination. Other visible light absorbing materials may be chosen in as far that they are substantially transparent to near-infra red light. In a variant all of the layers may be based on visible light absorbing materials and each of the layers may have different absorptions for different portions of the visible light.

Arranging at least one absorbing layer, in said second interference multilayer, which absorbs a portion of the incident visible light on said second type of infrared transmitting cover sheet allows to provide specific metallic-like color appearances of said second type of infrared transmitting cover sheet for an observer positioned at its incident light side. Materials such as a-Si, SiOx, Ge, SiGe, may be used in said at least one absorbing layer as they have a higher absorption in the blue part of the spectrum than in the red part of the spectrum. The use of polymeric materials in said at least one absorbing layer comprising pigments and dyes allows having materials with better absorption of the green or red parts of the visible spectrum than the blue part of the spectrum, which allows to enlarge the range of colored appearances of the infrared transmitting cover sheet that may be obtained.

Said second interference multilayer of said second infrared transmitting cover sheet may comprise a plurality of polymeric layers arranged so that adjacent polymer layers have different refractive indexes. Said second interference multilayer may be made of a polymer, more specifically of a material selected from the group comprising polystyrene (PS), polycarbonate (PC), polyethylene (PE), polymethylmethacrylate (PMMA), and comprises at least one polymeric layer made partially absorptive to visible light by adding pigments or dyes to said polymeric layer.

Using polymers for said second interference multilayer allows to provide alternative design possibilities of the infrared transmitting cover sheet, especially in cases wherein an improved flexibility of said infrared transmitting cover sheet is desired.

Said front sheet 310 may be made of a material selected from the group comprising glass, Polyethylene terephthalate (PET), Polycarbonate (PC), Polyethylene napthalate (PEN), Polymethyl methacrylate (PMMA), polyesters, polyethylene (PE), polypropylene (PP), Polyethylene furanoate, polymers based on poly (bis-cyclopentadiene) condensates, fluorine based polymers, colorless polyimide (CP), cellulose, PEEK polymers, and a combination thereof. The option to choose one of these materials or a combination allows to provide a wide range of solutions in terms of mechanical strength, rigidity, resistance to impacts, impermeability to water and resistance to temperature and UV radiation for said front sheet.

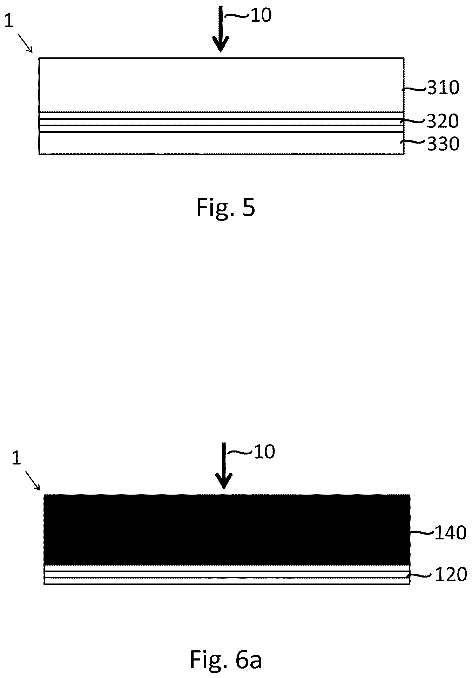

In an embodiment, shown in Fig. 5, a second encapsulating layer 330 may be arranged to said second interferential layer, to the side away from said front sheet 310. Arranging a second encapsulant layer 330 to said second multilayer allows to provide a solution to improve the adherence of said second type of infrared transmitting cover sheet to an underlying element such as a glass sheet or an infrared photosensitive element module or the like. The encapsulant layer combined with said front sheet (310) has the function to protect the underlying, and invisible, device from the combined action of changing temperature and humidity conditions of the environment and allows to assure a high long term reliability.

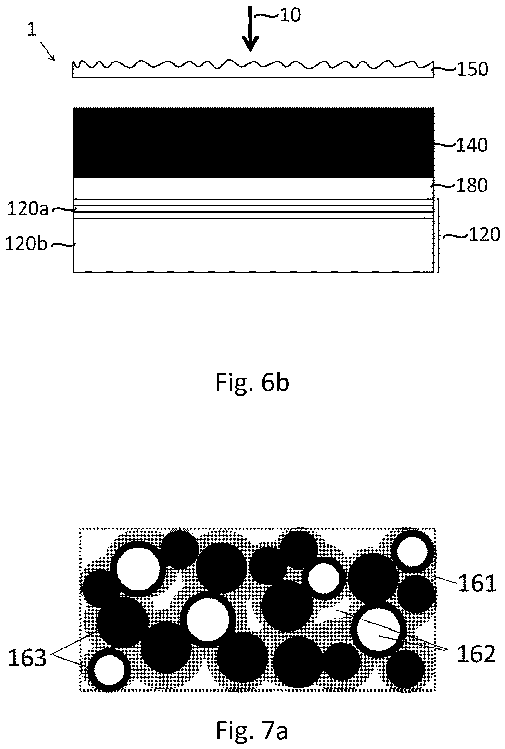

In an embodiment said front sheet 310 may comprise a light dispersion layer 160. Figs 7a-d show different variants of a light dispersion layer 160. Figs 7a shows a light dispersion layer 160 comprising a binder material 161 and at least a plurality of zones 162 having a different refractive index than said binder material. Said zones may comprise micro beads 163 that are transparent to infrared light, said micro beads 163 are substantially spherical beads 163, but may have another shape, and have a typical diameter between 0.5 µm and 100 µm. Said micro beads 163 are arranged to scatter and diffuse at least a portion of the visible light.

The refractive index difference between said micro-beads 163 and said binder material 161 is chosen so as to provide enough light dispersion. In order to obtain said refractive index difference, the micro-beads can be arranged to leave voids between said micro beads, or hollow micro beads or micro beads having a coated surface may also be used. The shape of said micro beads may be spherical but also irregular shaped beads may be used. Micro beads 163 have a preferred average diameter smaller than 100 µm, preferably between 1 µm and 50 µm.

Said micro beads 163 may be made of materials chosen from the group comprising acrylic polymers, polymethylmethacrylate (PMMA), polystyrene (PS), polyethylene, glass, silica, polysilsesquioxane, silicone or alumina. Said binder material may be an acrylic based resin which polymerizes under UV radiation. Said binder material may be made porous or may contain small particles, for example high refractive index TiO2 based particles. Examples of said polymeric substrates sheets are the ones typically used as bottom diffusers in liquid crystal display (LCD) screens, such as the Optigrafix DFPM foil from Grafix plastics (Ohio).

Said light dispersion layer 160 may be realized in different ways, illustrated in Figs. 7a-d.

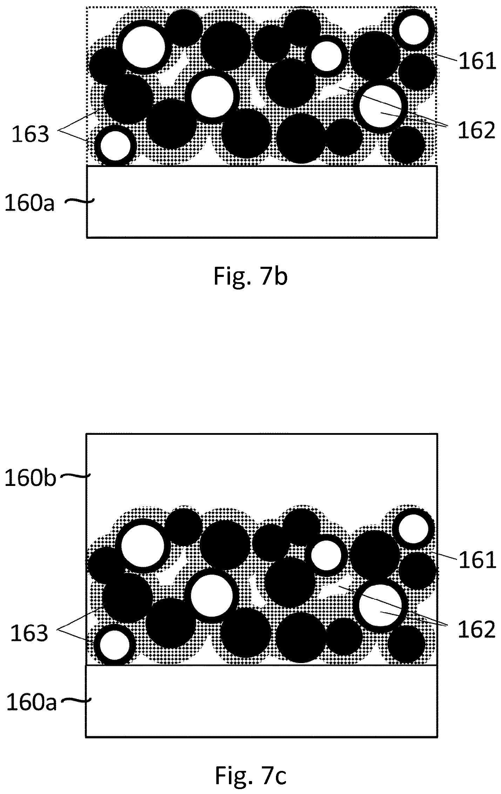

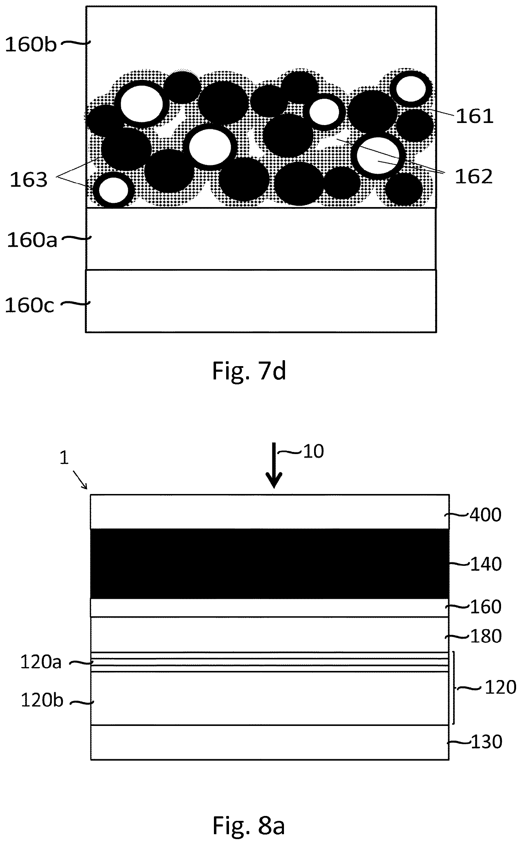

In a variant shown in Fig. 7b a polymer foil 160a is used as a carrier for a binder material comprising micro beads 163. Fig 7c shows a variant in which an encapsulant layer 160b comprises said micro beads 163, said encapsulating layer 160b may serve as an adherence layer of said front sheet 310 to said second multilayer 320. In the variant of Fig 7d an additional encapsulant layer is arranged to both sides of said light dispersion layer 160. Arranging an encapsulant layer to both sides of said polymer foil allows to arrange said light dispersion layer 160 between said front sheet 310 and said second multilayer 320. Said polymer carrier foil may be fixed to said front sheet by either gluing, hot pressing or a lamination process. Said polymer carrier foil may be made from polyethylene (PET) or polycarbonate (PC). Arranging a textured surface and/or a layer of comprising microbeads to said absorption layer enlarges the design possibilities of the infrared transmitting cover sheet, especially in cases wherein a mate appearance of said infrared transmitting cover sheet, is desired. For example, in an embodiment said light dispersion layer 160 may be arranged between said front sheet 310 and said second multilayer 320, said second multilayer 320 being designed to reflect a large part of the visible light of the spectrum so that a white appearance of the infrared transmitting cover sheet 1 is obtained and provided to an observer.

Fig. 6a illustrates an embodiment of said third type of an infrared transmitting cover sheet.

Said third type of an infrared transmitting cover sheet 1 comprises at least an absorption sheet 140 and a third multilayer 120. In the embodiment of Fig. 6a a third multilayer 120 is arranged directly on said absorption sheet 140, also defined as a color filter 140. In a preferred realization of the embodiment of Fig. 6a said third multilayer 120 is deposited layer by layer on said absorption sheet.

Said color filter 140 may be a commercial color filter or may be an absorption sheet comprising absorbing substances that absorb at least a portion of said incident light, said absorption sheet 140 being transparent to infrared light. Said absorbing substances may be pigments or dyes incorporated in a material selected from the group comprising glass, Polyethylene terephthalate (PET), Polycarbonate (PC), Polyethylene napthalate (PEN), Polymethyl methacrylate (PMMA), polyesters, polyethylene (PE), polypropylene (PP), Polyethylene furanoate, polymers based on poly (bis-cyclopentadiene) condensates, fluorine based polymers, colorless polyimide (CP), cellulose, PEEK polymers, and a combination thereof.

In an embodiment said absorption sheet 140 may comprise several layers, each layer absorbing a different portion of the visible incident light. One layer may for example have higher transparency for red light, and another layer may has higher transparency for blue light so that a purple appearance of the infrared transmitting cover sheet 1 is obtained.

Adding coloring substances that absorb a portion of incident visible light to an absorption sheet which is transparent for visible and near-infrared light, allows to provide third type of infrared transmitting cover sheet 1 having a wide range of predetermined color appearance choices. As there is no compatibility between all dyes and plastics, a large number of eligible plastic materials and combinations allow to provide a wide range of possibilities to create a specific color appearance of said third type of infrared transmitting cover sheet for an observer positioned at its incident light side.

Said third multilayer 120 comprises at least a third interference multilayer comprising layers made of materials chosen from the group comprising TiO2, Nb2O5, Ta2O5, ZrO2, Al2O3, SiO2, Si3N4, MgF2, a-Si, SiOx. Combining said third multilayer with said absorption front sheet 140 allows to reflect back to the incident light side the portion of visible light that is not absorbed by the absorption front sheet. The main function of said third multilayer is to guarantee the opacity of the third type infrared transmitting cover sheets for visible light, and as such assure that as less as possible visible light is transmitted by said third type of infrared transmitting cover sheet.

In an embodiment said absorption sheet 140 may be an encapsulant layer comprising added dyes or pigments. Typical materials to be used in such an embodiment are colored ethylene vinyl acetate (EVA) or polyvinyl butyral (PVB). Examples of absorption sheets 140 based on encapsulants are Evalam color foils from Hornos Industriales Pujol S.A. or colored PVB foils from the division Trosifol of the Kuraray Group in Japan.

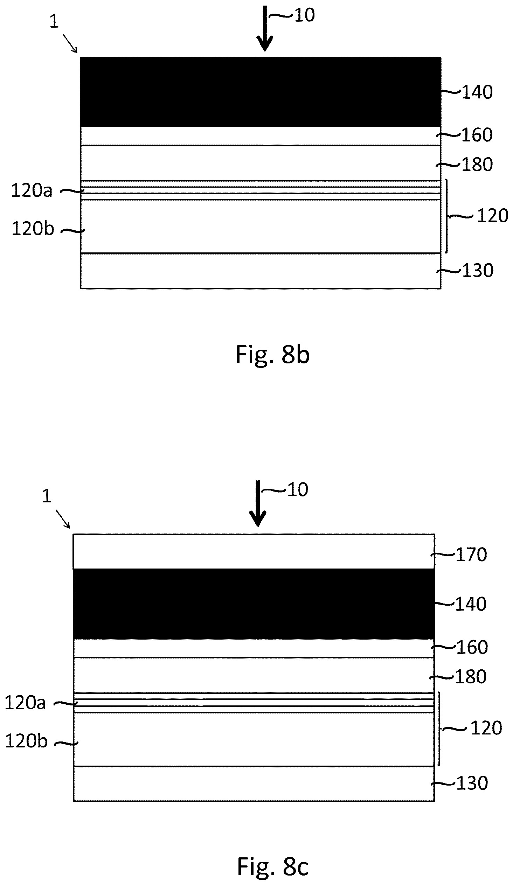

In an embodiment of said third type of infrared transmitting cover sheet, illustrated in Fig.8a-c, a third encapsulating layer 180 may be arranged to the incident light side of said third multilayer 120. The advantage to use said third encapsulant layer 180 is to provide a solution to arrange the third multilayer 120 to the absorption sheet 140 when said absorption sheet 140 is not based on an encapsulant material and the third interferential multilayer 120a has been arranged on a different substrate 120b than the absorption sheet 140 itself. The third encapsulant material 180 can be colored enlarging the gamma of possible colors by allowing the combination of absorption sheets 140 with colored encapsulants 180. In a variant a further fourth encapsulating layer 130 may be arranged to said third interferential layer, to the side away from said absorption sheet 140. In a variant, a third and a fourth encapsulating layers may be arranged on both sides of said third multilayer 120. The advantage of arranging a fourth encapsulating layer 130 to said third interferential layer is to provide a solution to arrange, adapt or fix said third type of infrared transmitting cover sheet to an infrared photosensitive device.

In an example of realization, said third type of infrared transmitting cover sheet may be realized by the assembly or lamination of two layers, a first layer comprising said absorption sheet 140 and a second layer comprising said third multilayer 120 on which an encapsulating layer 180 has been arranged to the incident light side. Said two layers may be assembled by hot-pressing or a lamination technique. In a second variant of realization, a first layer comprises a front sheet 170 and a second layer comprises said third multilayer 120 comprising an absorption sheet which is a colored encapsulating material. In said second variant said first layer and said second layer may be assembled by hot-pressing or a lamination technique.

In an embodiment a light dispersion layer 160, similar as the one described in paragraphs [00050] to [00054] for said second infrared transmitting cover sheet, may be arranged to said absorption sheet. In a variant, said light dispersion layer 160 may comprise an encapsulant layer so that said absorption sheet may be arranged to said light dispersion layer 160, by for example a lamination technique or hot-pressing technique. In an example of realization, said third type of infrared transmitting cover sheet may be realized by the assembly or lamination of three layers, a first layer comprising said absorption sheet 140, a second layer comprising said light dispersion layer 160 on which an encapsulating layer 160b has been arranged to the incident light side and a third layer comprising said third multilayer 120 on which an encapsulating layer 180 has been arranged to the incident light side. Said three layers may be assembled by hot-pressing or a lamination technique.

In an embodiment of said third type of infrared transmitting cover sheet the surface of said absorption sheet to the incident light 10 may be a rough surface, defined as a surface that may scatter incident visible light, said textured surface being arranged to give a mate appearance and/or to reduce the total reflection of said third infrared transmitting cover sheet 1.

In an embodiment of said first, second and third type of infrared transmitting cover sheet 1 a visible light diffusing layer 150 may be arranged to the incident light side of said first, second and third type of infrared transmitting cover sheet, said visible light diffusing layer being arranged to give a mate appearance and/or to reduce the total reflection of said infrared transmitting cover sheet 1. Said visible light diffusing layer may be arranged on an additional foil, said additional foil being arranged to said infrared transmitting cover sheet 1. Exemplary light diffusing layers comprise a polymeric foil with retro-reflective features embossed on its surface. These retro-reflective features, typically being in the micrometer-millimeter range, may have a pyramidal, cubical or lenticular shape. In another example, the light diffusing layer consists of a glass sheet textured by sandblasting its surface. Arranging a visible light diffusing layer to any of the said three types of infrared transmitting cover sheets 1, enlarges the design possibilities of the infrared transmitting cover sheet 1, especially in cases wherein a mate appearance of said three types of infrared transmitting cover sheets is desired.

In an embodiment of said first, second and third type of infrared transmitting cover sheets, an anti-reflective coating may be arranged to the incident light surface. An exemplary anti-reflective coating consists of a single layer made of MgF2. In another example, the anti-reflective coating may comprise three layers made of Al2O3, ZrO2 and MgF2.

In an embodiment of said first, second and third type of infrared transmitting cover sheet 1, a further encapsulant layer 400 may be arranged to the incident light side of said first, second and third type of infrared transmitting cover sheets. Said further encapsulant layer 400 allows to provide a solution to improve the adherence of said third type of infrared transmitting cover sheets 1 to a substrate such as a glass layer. Said further encapsulant layer 400 combined with the front sheet has the function to protect for example an underlaying photoconversion device from the combined action of changing temperature and humidity conditions of the environment and allows to assure a high reliability of an underlaying photoconversion for at least 20 years.

In an embodiment of said first, second and third type of infrared transmitting cover sheet a further encapsulant layer 400 may be arranged to the incident light side of said first, second and third type of infrared transmitting cover sheets and an additional encapsulant layer may be arranged to the opposite light side of said first, second and third type of infrared transmitting cover sheet. Arranging an encapsulant layer to each of both sides of said first, second and third type of infrared transmitting cover sheet allows to arrange and fix said first, second and third type of infrared transmitting cover sheet to a first element positioned at the incident light side of said first, second and third type of infrared transmitting cover sheet and to a second element positioned at the side opposite to the incident light of said first, second and third type of infrared transmitting cover sheet 1. Said first and said second element may be made of a rigid material or at least one of said first or second elements may be a flexible element, such as a polymer layer. In an example of use of said first, second and third type of infrared transmitting cover sheet said first element is a glass layer and said second element is a PV cell or an assembly of PV cells electrically interconnected. In an embodiment of said first, second and third types of infrared transmitting cover sheet the color appearance may be non-uniform and the structural features of said first, second and third types of infrared transmitting cover sheet may be arranged to obtain multicolor appearances to an observer, said color appearances may represent for example logos, symbols, adds, flags.

### I) Preferred colors for each of the three types of infrared transmitting cover sheet.

The colored film 1 of the third type allows to obtain a huge large variety of color appearances. The colored appearance is mainly due to the absorption filter 140 arranged in said third type of color film 1, and multiple commercial products are available for such absorption filter 140: Trosifol (colored foils based on poly(vinyl butyral) (PVB), Roscolux (colored foils based on polycarbonate and polyester materials) or Lee filters. Thus, a large gamma of colors is possible for the third type of infrared transmitting cover sheets, therefore there is no preferred color region in the CIE diagram.

Color films 1 of the first type are suited for a narrower color range than color films of the third type. The absorption material that is principally used in color films 1 of the second type is a-Si, which is mainly absorbing at short wavelengths, defined as smaller than 480nm. By using a-Si as the absorbing material in said first type of multilayer 230, said first type of color film is better suited to produce low luminance colors such as: grey, brown, terracotta, yellow-orange and reddish.

The second type of infrared transmitting cover sheets may be chosen for similar preferred colors as in the case of a first type color film, but with the exception of dark grey and brown colors. The colors achieved using the second type of infrared transmitting cover sheet have higher luminance, and have a more metallic appearance than said third type of infrared transmitting cover sheet, even if the CIE coordinates are similar.

The following table summarizes the preferred colors for the three types of infrared transmitting cover sheet.

**Table 1. Preferred colors for each type of infrared transmitting cover sheet**

| Colored foil option | Preferred Colors | Possible Colors |
|---|---|---|
| III | All | All |
| I | Dark grey, brown, terracotta, gold and reddish | Blue, green and high luminance colors in general |
| II | Gold, copper, silver (metallic colors), white | Blue and green |

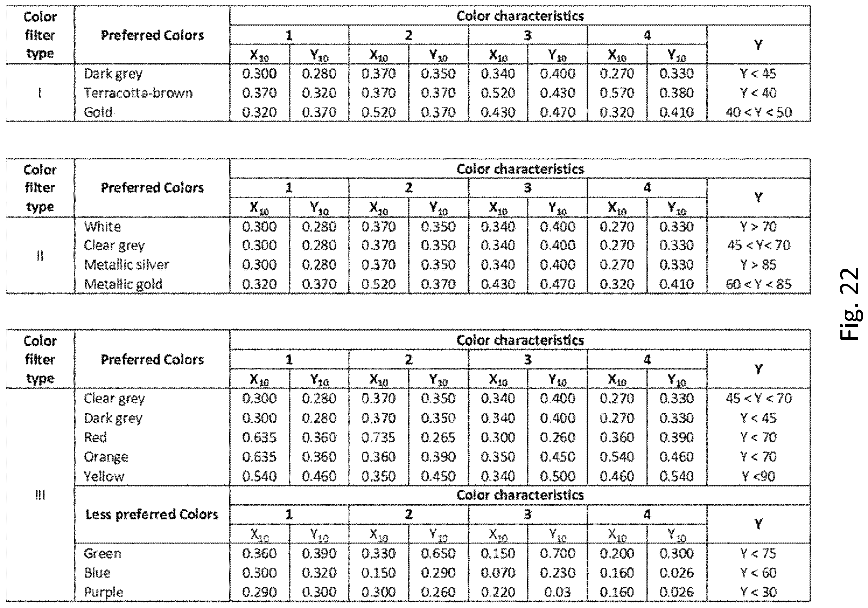

More precisely, the table of Fig. 22 defines the preferred colors of table 1 that can be obtained for the first, second and third type of infrared transmitting cover sheets. The area inside the CIE diagram which covers each said preferred color is defined by the x10 and y10 coordinates of the four corner points which delimit said area. Moreover, for each preferred color inside said area, a range of luminance (Y) is given. In the table of Fig.22 the white and clear grey colors of the type II color filter are realized by an embodiment that comprises a diffusion layer 160 that allows to obtain a mate appearance.

It is generally understood that the infrared transmitting covers may be adapted to the texture and/or color of the object that has to be hidden by the infrared transmitting cover sheet 1. More precisely the acceptable residual visible light that is transmitted by the infrared transmitting cover sheet 1 is always lower than 20% of the total intensity of the incident light on the infrared transmitting cover 1. In some cases this residual transmitted light intensity must be made smaller than 15%, even smaller than 10%, or even smaller than 5%, for example in the case of highly reflecting objects or objects comprising highly reflecting elements such a metal parts.

It is also generally understood that there are different ways to manage the transmitted light through the infrared transmitting covers.

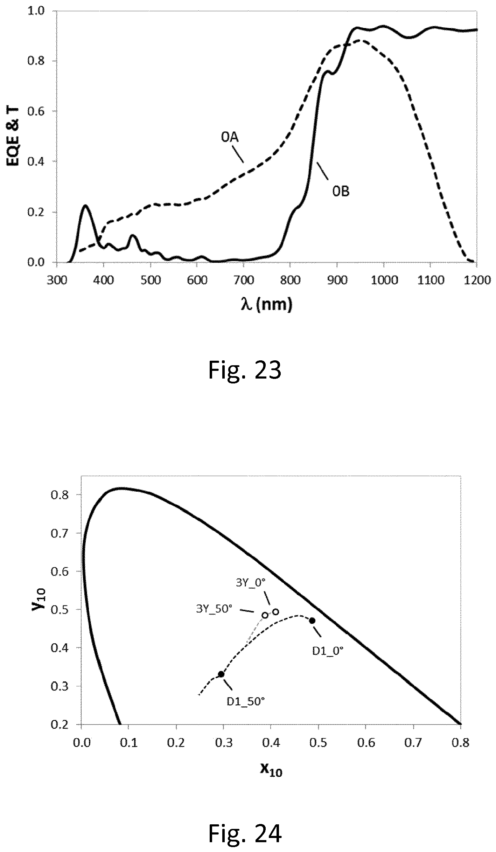

The transmitted visible light through the infrared transmitting cover sheet arriving to the object behind is dependent on how the infrared transmitting cover sheet is arranged to this object. For example, an infrared transmitting cover sheet of the present invention optically coupled to a solar panel may comprise an encapsulant layer arranged so as to have 30% of visible light transmitted through the infrared transmitting cover and which is converted to electricity, while the same infrared transmitting cover sheet alone may transmit less than 5% of normal incident visible light. Such an example is illustrated in Fig.23 which illustrates the transmission characteristics of an infrared transmitting sheet (OB) and the external quantum efficiency of a solar cell (OA) with the same infrared transmitting sheet attached on top by means of an encapsulant layer. The external quantum efficiency (EQE) indicates the probability that a photon of a particular wavelength impinging on the infrared transmitting cover sheet coupled to a solar cell has to generate an electron.

Different variants may be conceived with the three types of infrared transmitting cover sheets by using a light dispersion layer 160. Such a light dispersion layer scatters visible light which impinges the interference multilayer at high angles of incidence and increases its transmittance. This transmitted visible light may be absorbed and converted in to electricity when a photo-electric conversion device is arranged to the infrared transmitting cover sheet.

The use of materials absorbing visible light such as silicon (Si) in the interference multilayer may be conceived with the three types of infrared transmitting cover sheets. Such materials allow to control the amount of visible light transmitted through the infrared transmitting cover sheet 1. For example, an interference multilayer embedded between two mediums of refractive index 1.5 and containing only transparent materials will transmit around 35% of the visible light impinging at 50°, a similar interference multilayer containing silicon will reduce the visible light transmitted at the same angle to 15%. The use of such materials allows to control the amount of visible light which is transmitted through the infrared transmitting cover sheet 1 to keep the objects attached behind invisible, even if a light dispersion layer 160 with a high scattering power is needed to give to an infrared transmitting cover sheet 1 the desired aspect.

It is understood that absorption layers may be placed in any position inside the interference multilayer. For example, in one embodiment only one absorption layer is added to the interference multilayer to the side opposite to the incident light side.

Materials absorbing visible light such as silicon, germanium or alloys based on them have high refractive indexes which, in some cases, are close to 4. The refractive index contrast between these materials and low refractive index materials such as silicon dioxide can be as high as 2.5, what allows to fabricate thinner interference multilayers by incorporating such light absorption layers into their design. For example, an interference multilayer consisting of TiO2 and SiO2 may consist of 17 layers with a total thickness of 1.3 µm. In another example of realization an interference multilayer with half of the thickness (i.e. 0.65 µm) and an equivalent transmittance and reflectance as the interference multilayer having a thickness of 1.3 µm can be fabricated by adding hydrogenated amorphous silicon (a-Si:H) in the interference multilayer. In cases, where the desired color effect does not require a higher reflectance of visible light by the interference multilayer, interference multilayers may be designed using only light absorption materials as high refractive index materials. Such interference multilayers may consist of no more than 5 layers with total thicknesses below 0.3 µm. Thinner interference multilayers are preferable as their fabrication cost increases with their thickness.

It is also understood that in all embodiments light diffusing layers and light absorption layers may be combined to obtain the desired reflection colors and/or the desired transmission of visible light.

An important characteristic of all the types of the infrared transmitting cover sheet 1 is that the perceived reflected color is substantially independent of the angle of the incident light on the infrared transmitting cover sheet 1 and of the angle with which an observer looks to the infrared transmitting cover sheet 1. The infrared transmitting cover sheet 1 has a color variance that is very low when the incidence-viewing angles are less than 70°, said angles being defined relative to the normal to the plane of the infrared transmitting cover sheet. The color variance is defined as the change in the x-coordinate and/or the y-coordinate of the 1964 CIE color diagram when varying said incidence-viewing angles, relative to the color perceived when light is incident parallel to the normal to the plane of the infrared transmitting cover sheet and perceived by an observer looking along that normal. The color variance is less than 30%, more preferably less than 20%, even more preferably less than 10% for any incidence-viewing angle within 70° relative to said normal.

As an example Fig.24 shows the color variance of an infrared transmitting sheet of the type III. Under normal incident light and by observing the infrared transmitting sheet parallel to that normal the perceived color is yellow, defined by an x,y value of 0.4105, 0.4927 in the CIE 1964 color diagram. By changing the viewing and incident angles to 50° relative to the normal, the x and y coordinates are varied by a maximum change of -5%. Fig. 24 also shows the color variance of an infrared transmitting cover as the one disclosed in EP 1837920. Under normal incident light and by observing the infrared transmitting cover parallel to that normal the perceived color is also yellow, defined by an x,y value of 0.4876, 0.4699 in the CIE 1964 color diagram. By changing the viewing angle and incident angles to 50° relative to normal, the x and y coordinates significantly change with a variation in x,y values respect to the previous ones of - 39% and -29%, respectively.

In an embodiment at least a diffractive layer is arranged to at least one of the layers of said first multilayer or said second multilayer or said third multilayer. Said diffraction layer may be arranged to reduce the sensitivity of the color appearance relative to the incident angle of the incident light and/or the observation angle of an observer positioned to the incident light side of said solar photovoltaic module. A diffraction layer may be any diffractive structure for example a diffraction grating, a subwavelength grating or a zero order filter, or a combination of them , realized on one of the surfaces of at least one of the first, second or third multilayer.

### II) Examples of realization of first, second and third type infrared transmitting cover sheets

### IIA) Examples of the realization of first type infrared transmitting cover sheet

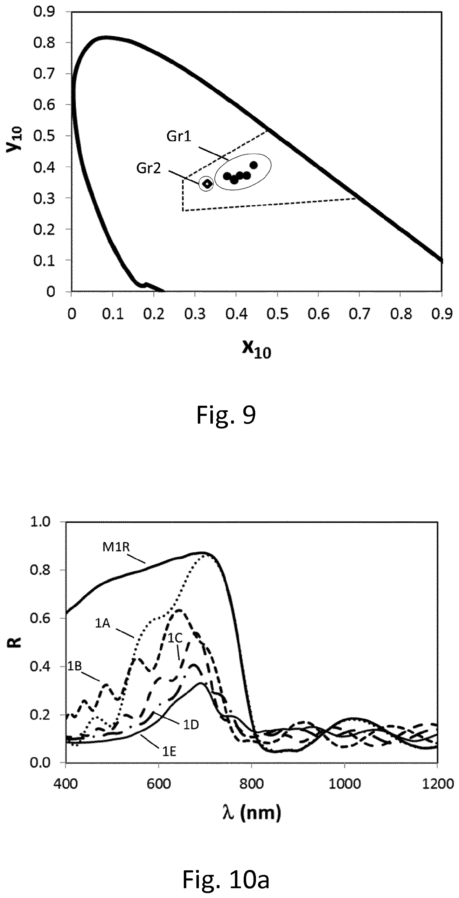

In an exemplary realization of infrared transmitting cover sheet of said first type, different samples having a grey, gold, brown or terracotta-like appearance have been fabricated, said samples being, represented as Gr1 and Gr2 in the CIE 1964 color graph of Fig.9, showing the CIE 1964 color coordinates calculated using the standard D65 illuminant for the samples deposited on ZnO (Gr1) and the samples deposited on a rough acrylic material (Gr2). The dashed line in Fig.9 shows the preferred range of colors which can be obtained with an infrared transmitting cover sheet of said first type.

In order to obtain type I samples, two different types of scattering layers have been used: the first colored infrared transmitting cover sheet (Gr1) is based on a ZnO layer (the refractive index of ZnO is substantially equal to 2) and the second (Gr2) one based on acrylic material (refractive index substantially equal to 1.5) The same first interferential filter made of alternative layers of amorphous silicon (a-Si) and silicon dioxide (SiO2) was deposited on top of the two types (ZnO, acrylic material) scattering layers.

Fig. 10a shows the reflection curve of an exemplary interferential filter (M1R) of the infrared transmitting cover sheet 1 of said first type, which is deposited on 0.5 mm thick borofloat glass, and having the following structure: a-Si (15 nm)/ SiO2 (115 nm)/ a-Si (30 nm)/ SiO2 (115 nm)/ a-Si (30 nm)/ SiO2 (115 nm)/ a-Si (15 nm).

Fig. 10a shows also reflection curves of different color filters (1A, 1B,1C,1D,1E) of the first type comprising said interferential filter deposited, for each of said color filter on different ZnO layers:

- an interferential filter comprising a first, smooth, texture (color film curve 1A) and an interferential filter comprising a second, rough, texture (color film curve 1E). Color filters of type 1A and 1E comprise a 0.5 µm and 1.5 µm thick ZnO layer deposited by LPCVD, respectively. The color filter 1A is deposited on the smoothest ZnO texture while the filter 1E is deposited on the roughest ZnO texture. The interferential filters (230) were also deposited either on a 1 µm thick ZnO (color film curve 1B) or on 1.5 µm thick ZnO layer and the original ZnO layer roughness has been smoothened under an oxygen-argon plasma treatment (color film curve 1C and 1D).

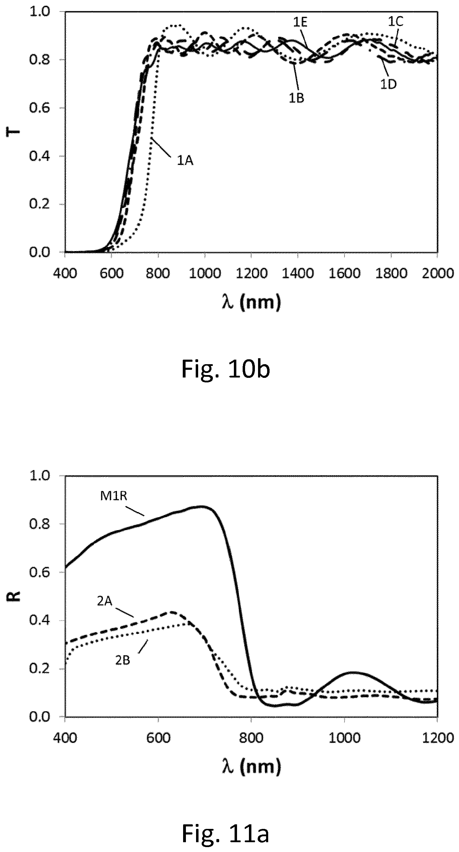

Fig. 10b shows the infrared transmission of said color filters 1A, 1B, 1C, 1D, 1E. All curves show an infrared transmission higher than 65% for wavelengths between 700nm and 2000nm, and a substantially zero transmission of visible light under 600nm and a transmission lower than 25% between 600nm and 650 nm. By adapting the layers of the color filter the transmission between 600nm and 700nm may be lower than 20%.

Fig. 11a. shows the measured reflectance of an exemplary interferential filter (M1R), identical to the one of Fig.10a, deposited on 0.5 mm thick borofloat glass. Fig. 11a also shows the reflectance curves of the same interferential filter (M1R) deposited on two different scattering layers (2A and 2B color filters) made of an acrylic UV curable resin with a refractive index close to 1.5. As an example, it may be noted from the reflectance curve of the infrared transmitting cover sheet 2A that the reflectance at 600nm is higher than 30% and that the reflectance of that infrared transmitting cover sheet 2A at 400nm is 30%.

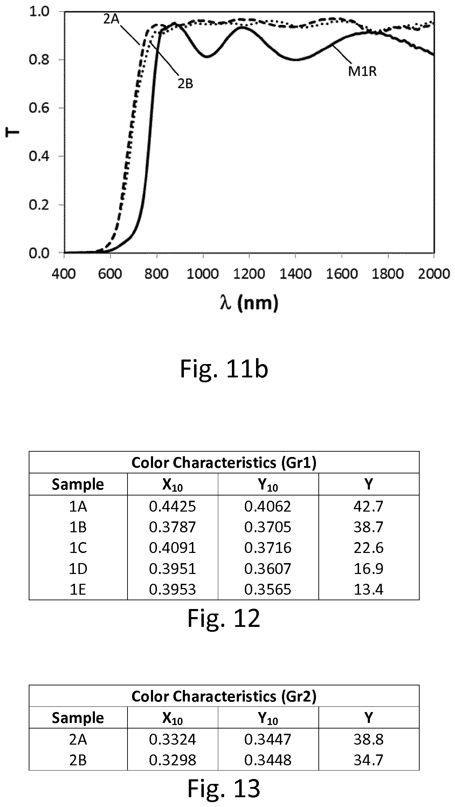

Fig. 11b shows the infrared transmission of said color filters 2A, 2B and the interferential filter M1R. All curves show an infrared transmission higher than 65% for wavelengths between 700nm and 2000nm, and a substantially zero transmission of visible light under 600nm. By adapting the layers of the color filter the transmission value between 600nm and 700nm may be made lower than 20%.

Fig. 12 and Fig. 13 summarize the color characteristics of the different examples of realizations of color films of the first type (1A-1E and 2A-2B color filters).

The table in Fig. 12 summarizes the CIE 1964 color coordinates (x10, y10) and luminance value (Y) calculated using the standard D65 illuminant for different type 1 color film samples using a scattering layer of ZnO (Gr1).

The table in Fig. 13 summarizes the CIE 1964 color coordinates (x10, y10) and luminance value (Y) calculated using the standard D65 illuminant for 2 different type 1 color films comprising a scattering layer 220 deposited on a rough acrylic material (Gr2).

Figs. 9-12 illustrate that the use of a ZnO scattering layer is a preferred choice to achieve low luminosity colors such as gold, brown and terracotta. The use of acrylic materials for the scattering layer allows to achieve more neutral color appearances having a low luminosity, such as dark grey colors. These type of colors occur frequently in building roofs and façades which makes the use of infrared transmitting cover sheet of said first type very interesting for example to adapt to PV cells and to integrate PV systems in buildings and give them an esthetic appearance.

### IIB) Example of the realization of second type infrared transmitting cover sheet

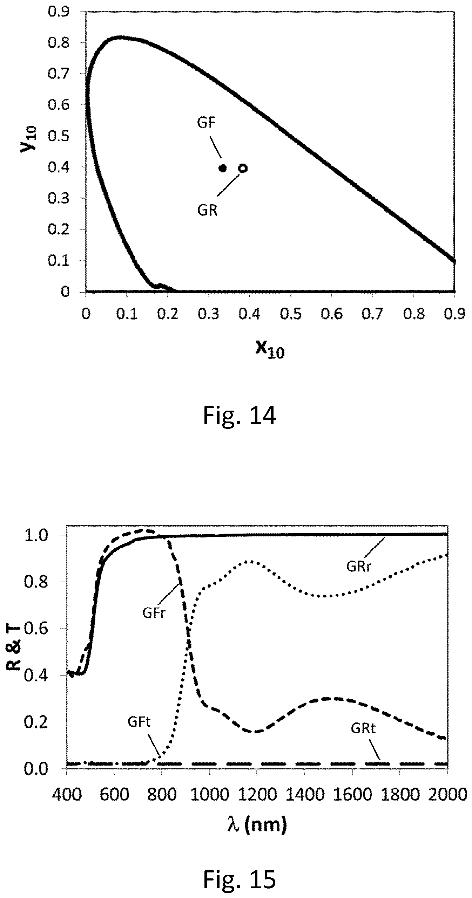

Fig. 4 shows the structural features of an exemplary second type infrared transmitting cover sheet having a visible reflection spectrum so that said infrared transmitting cover sheet has a golden colored appearance to an observer looking from the incident light side. Said golden colored appearance is represented in Fig.14 showing the CIE 1964 color coordinates calculated using the standard D65 illuminant for the golden colored film of the second type (GF) and a reference sample made of gold (GR).

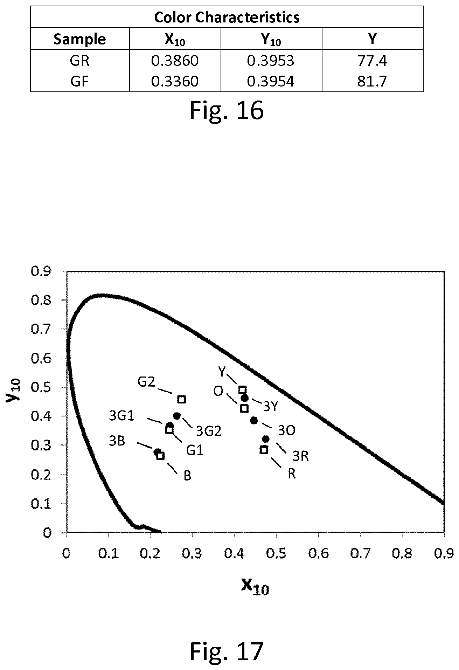

The table of Fig.16 summarizes the CIE 1964 color coordinates (x10, y10) and luminance value (Y) calculated using the standard D65 illuminant for the second type infrared transmitting cover sheet having a golden color appearance (GF) and also for a reference sample made of gold (GR).

The interferential filter 330 of said second type infrared transmitting cover sheet 1, having a gold appearance, is realized by depositing alternative layers of amorphous silicon (a-Si) and silicon dioxide (SiO2) grown on 1.1 mm thick borofloat glass. The layer structure of the exemplary second type infrared transmitting cover sheet is the following one: glass substrate a-Si (30 nm)/ SiO2 (120 nm)/ a-Si (40 nm)/ SiO2 (120 nm)/ a-Si (40 nm)/ SiO2 (120 nm)/ a-Si (20 nm). The second type color filter has a total of seven layers and its total thickness is: 0.495 µm.

Fig. 15 shows measured reflectances for the exemplary second type infrared transmitting cover sheet 1 type having a golden appearance (GFr) and for a reference sample made of gold (GRr). Fig.15 also shows the measured transmittances for a second type gold color filter (GFt) and the reference sample made of gold (GRt).

### IIC) Examples of the realization of third type infrared transmitting cover sheet

The embodiment of Fig. 8c, without comprising layers 160 and 130, represents the structural features of an exemplary third type infrared transmitting cover sheet 1 having a visible reflection spectrum so that said infrared transmitting cover sheet may have a wide range of colored appearance to an observer looking from the incident light side. Said wide range of colored appearance is represented in the table of Fig.17 showing the CIE 1964 color coordinates calculated using the standard D65 illuminant for different third type infrared transmitting cover sheets and colored PVB absorption sheets (3R). The empty squares and the full circular dots in the graph of Fig.17 represent the PVB absorption filters and the different color films of type 3, respectively.

For the infrared transmitting cover sheets of the third type, comprising an absorption sheet, also defined as color filter or color film, one may use for example commercially available colored poly(vinyl butyral) (PVB) foils from Trosifol. An exemplary interferential filter arranged on said color film 140 is made of alternative layers of amorphous silicon (a-Si) and silicon dioxide (SiO2) grown on 1.1 mm thick borofloat glass. The layer structure of the interferential filter is the following one: a-Si (15 nm)/ SiO2 (115 nm)/ a-Si (30 nm)/ SiO2 (115 nm)/ a-Si (30 nm)/ SiO2 (115 nm)/ a-Si (15 nm). The filter has a total of seven layers and its total thickness is 0.435 µm. The different type infrared transmitting cover sheets of the third type have been fabricated by laminating the interferential filter to different PVB absorption filters and to a 125 µm front sheet made of polyethylene naphtalate (PEN).

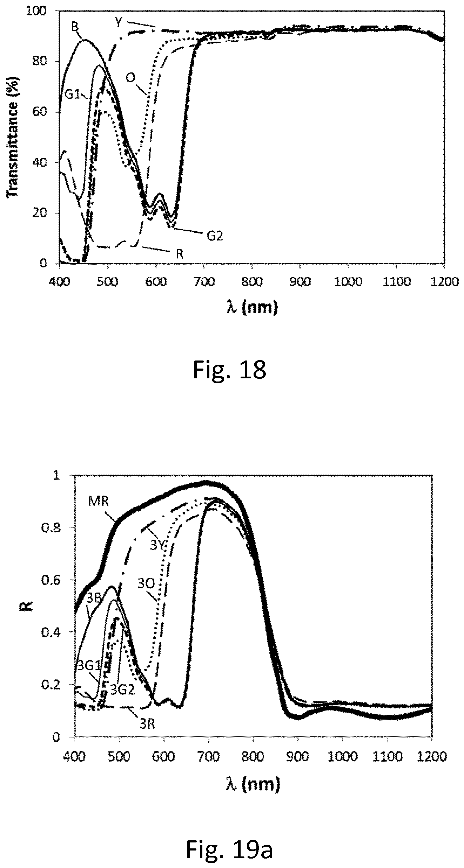

Fig.18 shows the measured transmittances of different commercially available colored poly(vinyl butyral) (PVB) foils from Trosifol used to fabricated color films of the third type. The symbols B,G1,G2,Y,O, R stand for Blue, Dark Green, Green, Yellow, Orange and Red color films 140.

Fig.19a shows the measured reflectance of different third type infrared transmitting absorption sheets 140 realized by laminating PVB colored foils, used as absorption front sheets, to the third interferential multilayer.

The symbols 3B, 3G1, 3G2, 3Y, 3O, 3R stand for Blue, Dark Green, Green, Yellow, Orange and Red third type infrared transmitting cover sheets. The total reflectance (MR) of the third type interferential filter alone is also shown in Fig. 19a.

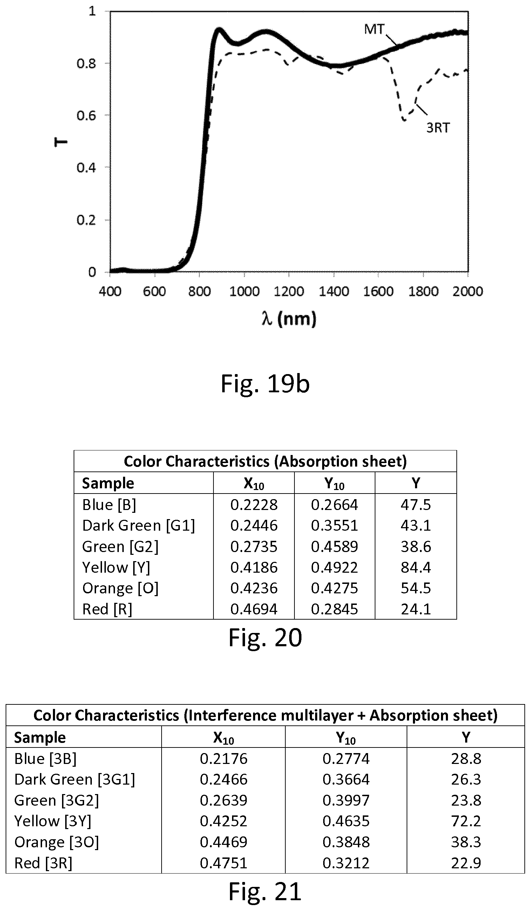

Fig. 19b shows the measured transmittance of the third type interferential filter alone (MT) and of a red (3RT) third type infrared transmitting cover sheet. The transmittance curves for the rest 3B, 3G1, 3G2, 3Y and 3O third type infrared transmitting cover sheets do not differ significantly from the red one (3RT) and for the sake of clarity they have not been represented in the Fig.19b.

Fig.17 shows CIE 1964 color coordinates calculated using the standard D65 illuminant for PVB absorption filters and different infrared transmitting cover sheets of the third type fabricated using them.

Fig. 20 shows a table that summarizes the CIE 1964 color coordinates (x10, y10) and luminance value (Y) calculated using the standard D65 illuminant for the PVB absorption filters 140 used.

Fig. 21 shows a table that summarizes the CIE 1964 color coordinates (x10, y10) and luminance value (Y) calculated using the standard D65 illuminant for the fabricated infrared transmitting cover sheets of the third type.

In conclusion, according to the invention, it has been demonstrated that an infrared transmitting cover sheet 1 may be realized, allowing to transmit near-infrared light, having as less as possible transmittance of visible light, and at the same time reflect a portion of the incident visible light, so that an observer positioned at the side of the incident light may not look through said infrared transmitting cover sheet, and perceive a predetermined color of that infrared transmitting cover sheet. More precisely it has been demonstrated experimentally that the infrared transmitting cover sheet has a transmittance of visible light lower than 25% for wavelengths lower than 650nm. It has also been demonstrated experimentally that the infrared transmitting cover sheet has a transmittance of near infrared light higher than 65% for near infrared wavelengths. Also, it has been demonstrated that a predetermined portion of the incident visible light, corresponding to a part of the spectrum of that incident visible light, may be reflected by at least 10% so that the infrared transmitting cover sheet has a colored appearance to an observer positioned to the incident light side. It has also been demonstrated experimentally, that said infrared transmitting cover sheet may be designed, arranged and realized according to three types, each of said type being adapted to a specific color range. The three types of infrared transmitting cover sheets allow to provide a wide range of choices for the color appearance of the infrared transmitting cover sheets to an observer positioned to the incident light side. It has been demonstrated also that for some color appearances at least two of said infrared transmitting cover sheet types may be used for the same color range. It has been demonstrated that part of the layers of said first, second and third infrared transmitting cover sheet types may be adapted to obtain special color effects, such as a metallic like appearance of said infrared transmitting cover sheet to an observer positioned in the incident light side.

## Claims

1. An infrared transmitting cover sheet (1) intended to receive incident light (10) comprising incident visible light and incident near infrared light, visible light being defined as light having a wavelength between 380nm and 700nm, excluding 700nm and near infrared light is defined as light having a wavelength between 700nm and 2000nm, wherein said infrared transmitting cover sheet (1) comprises:
- infrared transmission means arranged to transmit at least 65% of said incident near infrared light, through said infrared transmitting cover sheet,
- visible light transmission means,
- reflection means arranged to reflect a portion of said incident visible light of said infrared transmitting cover sheet, to the side of said incident light, said infrared transmission means and said visible light transmission means and said reflection means are comprised in an interference multilayer,
said interference multilayer having a transmission of less than 10%, for normal incident visible light on said interference multilayer,
said infrared transmitting cover sheet being arranged such that the visible light that is transmitted by the infrared transmitting cover sheet is less than 20% of the total intensity of the incident light on the infrared transmitting cover sheet so that, when attached to an object, this object becomes invisible for an observer.

2. The infrared transmitting cover sheet (1) according to claim 1, **characterized in that** it comprises at least:
- a front sheet (210) arranged to the incident light side of said infrared transmitting cover sheet (1),
- a scattering layer (220) arranged on said front sheet, to the side opposite to the incident light side
- a first multilayer (230) arranged on said scattering layer (220), said first multilayer (230) comprises said interference multilayer, said interference multilayer is called a first interference multilayer and comprising at least one absorption layer,
said front sheet (210), said scattering layer (220) and said first multilayer (230) cooperating with one another so as to form said infrared transmission means, said visible light transmission means and said reflection means.

3. The infrared transmitting cover layer (1) according to claim 1, **characterized in that** it comprises at least a front sheet (310) and a second multilayer (320) arranged to said front sheet (310), said second multilayer (320) comprises at least said interference multilayer which is called a second interference multilayer, said second interference multilayer comprising at least an absorption layer, said front sheet (310) and said second multilayer (320) cooperating with one another so as to form said infrared transmission means, said visible light transmission means and said reflection means.

4. The infrared transmitting cover sheet according to claim 3, **characterized in that** a light dispersion layer (160) is arranged on said front sheet (310), said light dispersion layer (160) comprising a binder material (161) and at least a plurality of zones (162) having a different refractive index than said binder material (161).

5. The infrared transmitting cover sheet (1) according to claim 1, **characterized in that** it comprises at least:
- an absorption sheet (140) arranged to the incident light side of said infrared transmitting cover sheet (1) and comprising substances that absorb at least a portion of said incident visible light,
- a third multilayer (120) arranged on said absorption sheet (140), to the side opposite to the incident light side, said third multilayer (120) comprising at least said interference multilayer, which is called a third interference multilayer, said absorption sheet (140) and said third multilayer (120) cooperating with one another so as to form said infrared transmission means, said visible light transmission means and said reflection means.

6. The infrared transmitting cover sheet (1) according to claim 5, **characterized in that** said absorption sheet (140) is an encapsulant layer based on a material selected from the group comprising ethylene vinyl acetate (EVA), polyvinyl butyral (PVB), polyvinyl acetate (PVA), polyurethane (TPU), thermal Polyolefin (TPO), silicone elastomers, epoxy resins, and a combination thereof, said encapsulant layer comprising substances that absorb a portion of the incident visible light.

7. The infrared transmitting cover (1) sheet according to claim 5 and 6 **characterized in that** a front sheet (170) is arranged on said absorption sheet (140) to the incident light side.

8. The infrared transmitting cover sheet (1) according to one of claims 5 to 7, **characterized in that** said third interference multilayer is based on materials chosen from the group comprising TiO₂, Nb₂O₅, Ta₂O₅, ZrO₂, Al₂O₃, SiO₂, Si₃N₄, MgF2, a-Si, SiOₓ, or combinations thereof .

9. The infrared transmitting cover sheet (1) according to one of claims 5 to 8, **characterized in that** said third multilayer (120) comprises a third encapsulant layer (130) arranged to the side of said third multilayer (120) opposite to the incident light side.

10. The infrared transmitting cover sheet (1) according to one of claims 5 to 9, **characterized in that** said third multilayer (120) comprises a fourth encapsulant layer (180) arranged to the incident light side.

11. The infrared transmitting cover sheet (1) according to any one of claims 5 to 10, **characterized in that** a light dispersion layer (160) is arranged on said absorption sheet (140), said light dispersion layer (160) comprising a binder material (161) and at least a plurality of zones (162) having a different refractive index than said binder material (161).

12. The infrared transmitting cover sheet (1) according to claim 11, **characterized in that** said zones (162) comprise micro beads (163) being transparent to infrared light, said micro beads (163) being arranged to diffuse at least a portion of the visible light, said micro beads (163) having a diameter between 0.5 µm and 100 µm.

13. The infrared transmitting cover sheet (1) according to one of claims 1 to 12, **characterized in that** said infrared transmitting cover sheet (1) comprises an antireflection coating arranged to the incident light side of said infrared transmitting cover layer.

14. The infrared transmitting cover sheet (1) according to one of claims 1 to 13, **characterized in that** said infrared transmitting cover sheet (1) comprises a visible light diffusing layer (150), said visible light diffusing layer (150) comprising to the side of the incident light a textured surface (151) arranged to diffuse visible light, said visible light diffusing layer (150) comprising surface microfeatures having lateral dimensions comprised between 0.1 µm and 100 µm and peak-to-valley dimensions comprised between 0.1 µm and 100 µm.

15. The infrared transmitting cover sheet (1) according to one of claims 1 to 14, **characterized in that** said infrared transmitting cover sheet (1) comprises a further encapsulating layer (400) arranged to the incident light side of said infrared transmitting cover sheet (1).

## Patentansprüche

1. Infrarotdurchlässiges Deckblatt (1), das einfallendes Licht empfangen soll, umfassend einfallendes sichtbares Licht und einfallendes Nahinfrarotlicht, wobei sichtbares Licht als Licht mit einer Wellenlänge zwischen 380nm und 700nm, ausgenommen 700nm, und Nahinfrarotlicht als Licht mit einer Wellenlänge zwischen 700nm und 2000nm definiert ist,
worin das besagte infrarotdurchlässige Deckblatt (1) aufweist:
- Infrarotübertragungsmittel, angeordnet um mindestens 65% des besagten einfallenden Infrarotlichts durch das besagte infrarotdurchlässige Deckblatt durchzulassen,
- Übertragungsmittel für sichtbares Licht,
- Reflexionsmittel, welche angeordnet sind, um einen Teil des besagten einfallenden sichtbaren Lichts des besagten infrarotdurchlässigen Deckblatts (1) auf die Seite des besagten einfallenden Lichts zu reflektieren, wobei die besagten Infrarotübertragungsmittel und die besagten Übertragungsmittel für sichtbares Licht in einer Interferenzmehrfachschicht enthalten sind,
wobei die besagte Interferenzmehrfachschicht eine Transmission von weniger als 10% für normal einfallendes sichtbares Licht auf der besagten Interferenzmehrfachschicht aufweist,
wobei das besagte infrarotdurchlässige Deckblatt derart angeordnet ist, dass das sichtbare Licht, welches durch das infrarotdurchlässige Deckblatt durchgelassen wird, weniger als 20% der Gesamtintensität des einfallenden Lichtes auf das infrarotdurchlässige Deckblatt ausmacht, so dass wenn es an einem Objekt angebracht ist, dieses Objekt für einen Beobachter unsichtbar wird.

2. Infrarotdurchlässiges Deckblatt (1) gemäss Anspruch 1 oder 2, **dadurch gekennzeichnet, dass** es mindestens umfasst:
- ein Vorderblatt (210), das zur Seite des einfallenden Lichtes des besagten infrarotdurchlässigen Deckblatts (1) angeordnet ist,
- eine Streuschicht (220), die auf dem besagten Vorderblatt auf der zur Seite des einfallenden Licht gegenüberliegenden Seite angeordnet ist,
- eine auf der besagten Streuschicht (220) angeordnete erste Multischicht (230), wobei die besagte erste Multischicht (230) mindestens die besagte Interferenzmehrfachschicht aufweist, wobei die besagte Interferenzmehrfachschicht erste Interferenzmehrfachschicht genannt wird und mindestens eine Absorptionsschicht umfasst,
wobei das besagte Vorderblatt (210), die besagte Streuschicht (220) und die besagte erste Multischicht (230) miteinander zusammenwirken, um die besagten Infrarotübertragungsmittel, die besagten Übertragungsmittel für sichtbares Licht und die besagten Reflexionsmittel zu bilden.

3. Infrarotdurchlässiges Deckblatt (1) gemäss Anspruch 1, **dadurch gekennzeichnet, dass** es mindestens ein Vorderblatt (310) und eine zum besagten Vorderblatt (310) angeordnete zweite Multischicht (320) umfasst, wobei die besagte zweite Multischicht (320) mindestens die besagte Interferenzmehrfachschicht aufweist, welche zweite Interferenzmehrfachschicht genannt wird, wobei die besagte zweite Interferenzmehrfachschicht mindestens eine Absorptionsschicht umfasst, wobei das besagte Vorderblatt (310) und die besagte zweite Multischicht (320) miteinander zusammenwirken, um die besagten Infrarotübertragungsmittel, die besagten Übertragungsmittel für sichtbares Licht und die besagten Reflexionsmittel zu bilden.

4. Infrarotdurchlässiges Deckblatt (1) gemäss Anspruch 3, **dadurch gekennzeichnet, dass** eine Lichtdispersionsschicht (160) auf dem besagten Vorderblatt (310) angeordnet ist, wobei die besagte Lichtdispersionsschicht (160) ein Bindermaterial (161) und mindestens eine Vielzahl von Zonen (162) mit einem anderen Brechungsindex als das besagte Bindermaterial (161) umfasst.

5. Infrarotdurchlässiges Deckblatt (1) gemäss Anspruch 1, **dadurch gekennzeichnet, dass** es mindestens umfasst:
- ein Absorptionsblatt (140), das zur Seite des einfallenden Lichtes des besagten infrarotdurchlässigen Deckblattes (4) angeordnet ist, und mit Substanzen, die mindestens einen Teil des besagten einfallenden sichtbaren Lichts absorbieren,
- eine dritte Mehrfachschicht (120), welche auf dem besagten Absorptionsblatt (140) auf der zur Seite des einfallenden Lichts gegenüberliegenden Seite angeordnet ist, wobei die besagte dritte Mehrfachschicht (120) mindestens die besagte Interferenzschicht umfasst, welche dritte Interferenzschicht genannt wird, wobei die besagte Absorptionsschicht (140) und die besagte dritte Mehrfachschicht (120) miteinander zusammenwirken, um die besagten Infrarotübertragungsmittel, die besagten Übertragungsmittel für sichtbares Licht und die besagten Reflexionsmittel zu bilden.

6. Infrarotdurchlässiges Deckblatt (1) gemäss Anspruch 5, **dadurch gekennzeichnet, dass** die besagte Absorptionsschicht (140) eine Verkapselungsschicht ist, welche auf einem Material basiert, das aus der Gruppe bestehend aus Ethylenvinylacetat (EVA), Polyvinylbutyral (PVB), Polyvinylacetat (PVA), Polyurethan (TPU), thermisches Polyolefin (TPO), Silikonelastomere, Epoxidharze und eine Kombination davon ausgewählt wird, wobei die besagte Verkapselungsschicht Substanzen aufweist, die einen Teil des einfallenden sichtbaren Lichts absorbieren.

7. Infrarotdurchlässiges Deckblatt (1) gemäss Anspruch 5 und 6, **dadurch gekennzeichnet, dass** ein Vorderblatt (170) auf dem besagten Absorptionsblatt (140) zur Seite des einfallenden Lichts angeordnet ist.

8. Infrarotdurchlässiges Deckblatt (1) gemäss einem der Ansprüche 5 bis 7, **dadurch gekennzeichnet, dass** die besagte dritte Interferenzmultischicht auf Materialien basiert ist, welche aus der Gruppe umfassend TiO₂, Nb₂O₅, Ta₂O₅, ZrO₂, Al₂O₃, SiO₂, Si₃N₄, MgF₂, a-Si, SiOₓ oder Kombinationen davon ausgewählt werden.

9. Infrarotdurchlässiges Deckblatt (1) gemäss einem der Ansprüche 5 bis 8, **dadurch gekennzeichnet, dass** die besagte dritte Mehrfachschicht (120) eine dritte Einkapselungsschicht (130) aufweist, welche auf der Seite der besagten dritten Mehrfachschicht (120) gegenüber der Seite des einfallenden Lichts angeordnet ist.

10. Infrarotdurchlässiges Deckblatt (1) gemäss einem der Ansprüche 5 bis 9, **dadurch gekennzeichnet, dass** die besagte dritte Mehrfachschicht (120) eine vierte Einkapselungsschicht (180) aufweist, welche auf der Seite des einfallenden Lichts angenordnet ist.

11. Infrarotdurchlässiges Deckblatt (1) gemäss irgendeinem der Ansprüche 5 bis 10, **dadurch gekennzeichnet, dass** eine Lichtdispersionsschicht (160) auf dem besagten Absorptionsblatt (140) angeordnet ist, wobei die besagte Lichtdispersionsschicht (160) ein Bindermaterial (161) und mindestens eine Vielzahl von Zonen (162) mit einem anderen Brechungsindex als das besagte Bindermaterial (161) umfasst.

12. Infrarotdurchlässiges Deckblatt (1) gemäss Anspruch 11, **dadurch gekennzeichnet, dass** die besagten Zonen (162) Mikroperlen (163) umfassen, die für Infrarotlicht transparent sind, wobei die besagten Mikroperlen (163) so angeordnet sind, um mindestens einen Teil des sichtbaren Lichts zu diffundieren, wobei die besagten Mikroperlen (163) einen Durchmesser zwischen 0,5µm und 100µm aufweisen.

13. Infrarotdurchlässiges Deckblatt (1) gemäss einem der Ansprüche 1 bis 12, **dadurch gekennzeichnet, dass** das besagte infrarotdurchlässigen Deckblatt (1) eine Antireflexionsbeschichtung umfasst, welche auf der Seite des einfallenden Lichts der besagten infrarotdurchlässigen Deckschicht angeordnet ist.

14. Infrarotdurchlässiges Deckblatt (1) gemäss einem der Ansprüche 1 bis 13, **dadurch gekennzeichnet, dass** das besagte infrarotdurchlässigen Deckblatt (1) eine Streuschicht für sichtbares Licht (150) umfasst, wobei die besagte Streuschicht für sichtbares Licht (150) zur Seite des einfallenden Lichts eine texturierte Oberfläche (151) aufweist, die angeordnet ist, um sichtbares Licht zu diffundieren, wobei die besagte Streuschicht für sichtbares Licht (150) Oberflächenmikrostrukturen mit lateralen Abmessungen zwischen 0,1µm und 100µm und Rauhtiefen zwischen 0,1µm und 100µm aufweist.

15. Infrarotdurchlässiges Deckblatt (1) gemäss einem der Ansprüche 1 bis 14, **dadurch gekennzeichnet, dass** das besagte infrarotdurchlässige Deckblatt (1) eine weitere Einkapselungsschicht (400) umfasst, welche auf der Seite des einfallenden Lichts des besagten infrarotdurchlässigen Deckblattes (1) angeordnet ist.

## Revendications

1. Feuille de couverture transparente en infrarouge (1) destinée à recevoir de la lumière incidente (10) comprenant de la lumière visible incidente et de la lumière proche infrarouge, la lumière visible étant définie comme une lumière ayant une longueur d'onde comprise entre 380nm et 700nm, sauf 700nm, et la lumière proche infrarouge étant définie comme une lumière ayant une longueur d'onde comprise entre 700nm et 2000nm, dans lequel ladite feuille de couverture transparente en infrarouge (1) comprend:
- des moyens de transmission infrarouge agencés pour transmettre au moins 65% de ladite lumière infrarouge incidente à travers de ladite feuille de couverture transparente en infrarouge,
- des moyens de transmission de lumière visible
- des moyens de réflexion agencés pour réfléchir une partie de ladite lumière visible incidente de ladite feuille de couverture transparente en infrarouge, du côté de ladite lumière incidente,
lesdits moyens de transmission infrarouge et lesdits moyens de transmission de lumière visible et lesdits moyens de réflexion étant compris dans une multicouche interférentielle,
ladite multicouche interférentielle ayant une transmission inférieure à 10%, pour la lumière visible incidente normale sur ladite multicouche interférentielle,
ladite feuille de couverture transparente en infrarouge étant agencée de telle manière que la lumière visible qui est transmise par la feuille de couverture transparente en infrarouge est inférieure à 20% de l'intensité totale de la lumière incidente sur la feuille de couverture transparente en infrarouge de sorte que, lorsque cette dernière est fixée à un objet, cet objet devient invisible pour un observateur.

2. Feuille de couverture transparente en infrarouge (1) selon la revendication 1, **caractérisée en ce qu'**elle comprend au moins:
- une feuille avant (210) disposée vers la lumière incidente de ladite feuille de couverture transparente en infrarouge (1),
- une couche diffusante (220) disposée sur ladite feuille frontale, du côté opposé au côté de la lumière incidente,
- une première multicouche (230) agencée sur ladite couche diffusante (220), ladite première multicouche (230) comprenant ladite multicouche interférentielle, ladite multicouche interférentielle étant appelée première multicouche interférentielle et comprenant au moins une couche d'absorption,
ladite feuille avant (210), ladite couche diffusante (220) et ladite première multicouche (230) coopérant entre elles de manière à former lesdits moyens de transmission infrarouge, lesdits moyens de transmission de lumière visible et lesdits moyens de réflexion.

3. Feuille de couverture transparente en infrarouge (1) selon la revendication 1, **caractérisée en ce qu'**elle comprend au moins: une feuille avant (310) et une deuxième multicouche (320) agencée sur ladite feuille avant (310), ladite deuxième multicouche (320) comprenant au moins ladite multicouche interférentielle qui est appelée deuxième multicouche interférentielle, ladite deuxième multicouche interférentielle comprenant au moins une couche d'absorption, ladite feuille avant (310), et ladite deuxième multicouche (320) coopérant entre elles de manière à former lesdits moyens de transmission infrarouge, lesdits moyens de transmission de lumière visible et lesdits moyens de réflexion.

4. Feuille de couverture transparente en infrarouge (1) selon la revendication 3, **caractérisée en ce qu'**une couche de dispersion de lumière (160) est disposée sur ladite feuille frontale (310), ladite couche de dispersion de lumière (160) comprenant un matériau liant (161) et au moins une pluralité de zones (162) ayant un indice de réfraction différent de celui dudit matériau liant (161).

5. Feuille de couverture transparente en infrarouge (1) selon la revendication 1, **caractérisée en ce qu'**elle comprend au moins:
- une feuille d'absorption (140) disposée du côté de la lumière incidente de ladite feuille de couverture transparente en infrarouge (1) et comprenant des substances qui absorbent au moins une partie de ladite lumière visible incidente,
- une troisième multicouche (120) disposée sur ladite feuille d'absorption (140), du côté opposé au côté de la lumière incidente, ladite troisième multicouche (120) comprenant au moins ladite couche interférentielle, qui est appelée troisième multicouche interférentielle, ladite feuille d'absorption (140) et ladite troisième multicouche (120) coopérant entre elles de manière à former lesdits moyens de transmission infrarouge, lesdits moyens de transmission de lumière visible et lesdits moyens de réflexion.

6. Feuille de couverture transparente en infrarouge (1) selon la revendication 5, **caractérisée en ce que** ladite feuille d'absorption (140) est une couche d'encapsulation à base d'un matériau choisi parmi le groupe comprenant éthylène-acétate de vinyle (EVA), butyral de polyvinyle (PVB), acétate de polyvinyle (PVA), polyuréthane (TPU), polyoléfine thermique (TPO), les élastomères de silicone, les résines époxy et leurs combinaisons, ladite couche d'encapsulation comprenant des substances qui absorbent une partie de la lumière visible incidente.

7. Feuille de couverture transparente en infrarouge (1) selon la revendication 5 et 6, **caractérisée en ce qu'**une feuille frontale (170) est disposée sur ladite feuille d'absorption (140) du côté de la lumière incidente.

8. Feuille de couverture transparente en infrarouge selon l'une des revendications 5 à 7, **caractérisée en ce que** ladite troisième multicouche interférentielle est à base de matériaux choisis dans le groupe comprenant TiO₂, Nb₂O₅, Ta₂O₅, ZrO₂, Al₂O₃, SiO₂, Si₃N₄, MgF₂, a-Si, SiOₓ ou leurs combinaisons.

9. Feuille de couverture transparente en infrarouge (1) selon l'une des revendications 5 à 8, **caractérisée en ce que** ladite troisième multicouche (120) comprend une troisième couche d'encapsulation (130) disposée du côté de ladite troisième multicouche (120) opposée au côté de la lumière incidente.

10. Feuille de couverture transparente en infrarouge (1) selon l'une des revendications 5 à 9, **caractérisée en ce que** ladite troisième multicouche (120) comprend une quatrième couche d'encapsulation (180) disposée du côté de la lumière incidente.

11. Feuille de couverture transparente en infrarouge (1) selon l'une quelconque des revendications 5 à 10, **caractérisée en ce qu'**une couche de dispersion de lumière (160) est disposée sur ladite feuille d'absorption (140), ladite couche de dispersion de lumière (160) comprenant un matériau liant (161) et au moins une pluralité de zones (162) ayant un indice de réfraction différent de celui dudit matériau liant (161).

12. Feuille de couverture transparente en infrarouge (1) selon la revendication 11, **caractérisée en ce que** lesdites zones (162) comprennent des microbilles (163) transparentes à la lumière infrarouge, lesdites microbilles (163) étant agencées pour diffuser au moins une partie de la lumière visible, lesdites microbilles (163) ayant un diamètre compris entre 0,5µm et 100µm.

13. Feuille de couverture transparente en infrarouge (1) selon l'une des revendications 1 à 12, **caractérisée en ce que** ladite feuille de couverture transparente en infrarouge (1) comprend un revêtement antireflet agencé du côté de la lumière incidente de ladite couche de couverture transparente en infrarouge.

14. Feuille de couverture transparente en infrarouge (1) selon l'une des revendications 1 à 13, **caractérisée en ce que** ladite feuille de couverture transparente en infrarouge (1) comprend une couche de diffusion de lumière visible (150), ladite couche de diffusion de lumière visible (150) comprenant sur le côté la lumière incidente une surface texturée (151) agencée pour diffuser la lumière visible, ladite couche de diffusion de lumière visible (150) comprenant sur le côté de la lumière incidente des microéléments de surface ayant des dimensions latérales comprises entre 0,1µm et 100µm et des dimensions pic-vallée comprises entre 0,1µm et 100µm.

15. Feuille de couverture transparente en infrarouge (1) selon l'une des revendications 1 à 14, **caractérisée en ce que** ladite feuille de couverture transparente en infrarouge (1) comprend une autre couche d'encapsulation (400) disposée du côté de la lumière incidente de ladite feuille de couverture transparente en infrarouge (1).
